# EUROPÄISCHE PATENTSCHRIFT

(11) **EP 2 594 355 B1**
(45) Veröffentlichungstag und Bekanntmachung des Hinweises auf die Patenterteilung: **08.06.2016**
(21) Anmeldenummer: 11306506.4
(22) Anmeldetag: 17.11.2011
(51) Int. Cl.: B23K 9/025, B23K 26/26, B23K 37/04, B23K 37/047, B21C 37/26, B21D 39/03

(54) **Quernahtschneid- und schweißmaschine und -verfahren mit einer Vorrichtung zur Positionierung zweier gegenüberliegender Materialenden gegeneinander**
Cross cutting and seam welding machine and process with a device for positioning two opposing ends of materials one against the other
Machine et méthode de coupage et de soudage avec un dispositif de positionnement de deux extrémités de matériaux l'une contre l'autre

(43) Veröffentlichungstag der Anmeldung: 22.05.2013
(73) Patentinhaber: Nexans, 75008 Paris (FR)
(72) Erfinder: Schulz, Holger, 30167 Hannover (DE); Egerer, Ralf, 38723 Seesen (DE); Kutzbach, Wilhelm, 30853 Langenhagen (DE)
(74) Vertreter: Döring, Roger

(56) Entgegenhaltungen:
- WO-A1-2010/052339
- JP-A- 5 057 477
- US-A- 2 649 528
- US-A- 3 915 368

## Beschreibung

Die vorliegende Erfindung betrifft eine Vorrichtung zum Halten und Verbinden zweien Materialenden gemäß dem Oberbegriff des Anspruchs 1, und ein Verfahren zur Herstellung entlang ihren einander gegenüberliegen angeordneten Stirnflächen verschweißter Materialenden gemäß dem Oberbegriff des Anspruchs 6.

### Stand der Technik

Die US 2,649,528, als nächstliegenden Stand der Technik, beschreibt eine Schweißmaschine, bei der zwei Enden von Kupfersträngen in einem Abstand fixiert werden und ein Tiegel mit einer Ausnehmung unterhalb des Abstands mit Stellschrauben positionierbar ist, sodass ein Schweißhilfsstoff, der den Abstand zwischen den Kupfersträngen ausfüllen soll, von der Ausnehmung des Tiegels aufgenommen und gehalten wird.

Die US 5,456,405 beschreibt das Verschweißen von Blechstreifen bei der kontinuierlichen Herstellung eines Metallrohrs durch Schneiden der einander zugewandten Enden der Blechstreifen in einem Winkel zur Längsachse und mit einer Neigung gegen die Querschnittsebene, Verschweißen der gegenüberliegenden Enden und Entfernen überstehenden Materials in der Schweißnaht, wobei die Schweißnaht während des Schweißens durch seitlich an die Blechstreifen angesetzte Blechstücke über die Längskanten hinaus verlängert wird.

Die US 3,915,368 beschreibt einen Träger, auf dem ein erstes Stellglied und ein darauf verschiebliches zweites Stellglied zur Positionierung eines Metallbands angeordnet sind. Die Stellglieder werden eingesetzt, um das gehaltene Metallband gegen geschlossene Klemmbacken zu schieben, diese mit einer Schere zu schneiden und anschließend durch die geöffneten Klemmbacken vorzuschieben.

Die WO 2010/052339 A1 beschreibt zur Positionierung von Metallbändern lediglich angetriebene Rollen mit Lagefühlern für das Werkstück.

### Aufgabe der Erfindung

Die Aufgabe der Erfindung liegt in der Bereitstellung einer alternativen Vorrichtung und eines damit durchführbaren alternativen Verfahrens zum Verbinden von Stirnflächen zweier Blechstreifen.

### Allgemeine Beschreibung der Erfindung

Die Erfindung löst die Aufgabe mit einer Vorrichtung und einem Verfahren gemäß der Ansprüche 1 und 12, mit einer Vorrichtung und einem Verfahren zum positionsgenauen Anordnen zweier gegenüberliegender Materialenden gegeneinander mit vorbestimmter Kraft. Die erfindungsgemäße Vorrichtung erlaubt eine präzise Positionierung zweier gegenüberliegender Materialenden mit ihren Stirnflächen gegeneinander, wobei die Kraft, mit der die Stirnflächen gegeneinander bewegt werden bzw. gegeneinander angeordnet werden, vorbestimmt sein kann. Die Vorrichtung weist zwei Träger mit jeweils einer Fixiereinrichtung für jeweils ein Materialende auf, wobei zumindest ein erster der beiden Träger gegen den zweiten der Träger verschieblich geführt ist und zumindest der erste Träger ein erstes Stellglied und ein mit dem ersten Stellglied verbundenes zweites Stellglied aufweist, die einen Antrieb bilden, mit dem der erste Träger gegen den zweiten Träger verfahrbar ist. Bevorzugt bilden ein Schiebeelement, ein Verbindungselement und der daran befestigte Träger einen starren Rahmen, der bevorzugt mit dem Losende eines ersten Stellglieds verbunden ist, wobei dieses Losende z.B. am Schiebelement befestigt ist. Vorzugsweise ist zumindest der erste Träger auf Führungsschienen oder Führungsstangen geführt. Zur Positionierung kann zumindest einer der Träger einen Positionssensor aufweisen, der vorzugsweise mit einer Steuerungseinheit für das erste und/oder zweite Stellglied verbunden ist. Vorzugsweise ist der Positionssensor zwischen einem einstellbaren Teil des zweiten Stellglieds, das z.B. dessen mit dem Losende oder dessen Festende verbundene Teil ist, und dem Schiebeelement oder dem Grundgestell angeordnet. Besonders bevorzugt ist der Sensor zur Bestimmung der Positionierung der Teile des zweiten Stellglieds zueinander eingerichtet, so dass z.B. die Position des einstellbaren Teils des zweiten Stellglieds unter Kontrolle des Sensors gesteuert eingestellt werden kann, um eine kontrollierte Positionierung der Teile des zweiten Stellglieds zueinander und/oder eine kontrollierte Betätigung des zweiten Stellglieds zu erlauben. Alternativ oder zusätzlich kann die Vorrichtung einen Kraftsensor aufweisen, der eingerichtet ist, die zwischen den Trägern wirkende Kraft zu messen, wobei vorzugsweise der Kraftsensor mit einer Steuerungseinheit verbunden ist. Die Steuerungseinheit ist eingerichtet, das erste und/oder zweite Stellglied auf Basis des Signals eines Positionssensors und/oder eines Kraftsensors zu steuern, insbesondere zu verfahren, bis mittels eines Sensors eine vorbestimmte Position eines Trägers oder der Träger zueinander und/oder bis eine vorbestimmte Kraft zwischen den Trägern bestimmt wird.

Die Position der Träger, in der die gegenüberliegenden Materialenden gegeneinander angeordnet sind und verschweißt werden, wird auch als Schweißstellung bezeichnet.

Ein zweites Stellglied, das einen Schiebekeil aufweist, hat vorzugsweise als Sensor für die Bestimmung der Position des Trägers einen Sensor, der die Stellung des Schiebekeils bestimmt.

Bevorzugt weist die Vorrichtung eine Schneideinrichtung auf, die z.B. zwischen den Trägern beweglich ist und im Verfahren Materialenden in zueinander passende, insbesondere parallele Stirnflächen schneidet. Die Position, in der die Träger beabstandet sind, um die Schneideinrichtung an den Materialenden zu positionieren und insbesondere die Schneideinrichtung zwischen den Trägern zu bewegen, wird auch als Schneidstellung bezeichnet.

Generell beschreibt die Einrichtung der Vorrichtung, z.B. zur Durchführung von Verfahrensschritten, auch die entsprechenden Schritte des Verfahrens und die Beschreibung von Verfahrensschritten beschreibt die Einrichtung der Vorrichtung für diese Verfahrensschritte.

Die Vorrichtung und das Verfahren zum Verbinden zweier Materialenden durch Verschweißen miteinander ist insbesondere für die Verwendung zum Verschweißen der Stirnseiten dünner Bleche geeignet, beispielsweise für Bleche mit einer Dicke von <1 mm, beispielsweise von <0,5, bevorzugter von <0,3 mm Dicke, insbesondere mit einer Dicke von <0,2 mm, <0,1 mm oder <0,05mm. Denn das Zusammenwirken von erstem und zweitem Stellglied führt durch Steuerung des ersten und/oder des zweiten Stellglieds zu einer positionsgenauen Positionierung der Stirnflächen der Materialenden gegeneinander, insbesondere bis zum Erreichen eines vorbestimmten Abstands zwischen den Materialenden bzw. zwischen dem ersten und dem zweiten Träger, bevorzugt bis zum Erreichen einer vorbestimmten Kraft zwischen Trägern bzw. zwischen den an den Trägern fixierten, einander gegenüberliegenden Materialenden. Bevorzugt sind die Stirnflächen zueinander parallel. Bevorzugt wird der Abstand zwischen den Trägern und/oder die Kraft, die zwischen den Trägern wirkt, mit einem Abstandssensor bzw. einem Kraftsensor gemessen, wobei eine Steuereinheit abhängig vom Signal des Sensors das erste und/oder das zweite Stellglied steuert.

Der zweite Träger kann ortsfest fixiert sein, oder geführt gegen den ersten Träger verschieblich gelagert sein, insbesondere mit einem Antrieb, der ein erstes Stellglied oder ein erstes Stellglied und ein mit diesem verbundenes zweites Stellglied aufweist oder daraus besteht. In einer Ausführungsform können der erste und zweite Träger gegeneinander verschieblich sein und einen gleich aufgebauten Antrieb aufweisen. Daher bezieht sich die Beschreibung des Antriebs mit oder aus erstem und damit verbundenem zweiten Stellglied mit Bezug auf den ersten Träger auch auf die Ausbildung des zweiten Trägers in dessen Ausführungsformen mit einem Antrieb, der ein erstes Stellglied oder ein erstes und ein damit verbundenes zweites Stellglied aufweist oder daraus besteht.

Das erste Stellglied dient der Bewegung des ersten Trägers gegenüber dem zweiten Träger, z.B. in Richtung auf den zweiten Träger zu oder vom zweiten Träger weg zur groben Positionierung des ersten Trägers zum zweiten Träger, während das zweite Stellglied der genaueren Positionierung des ersten Trägers gegenüber dem zweiten Träger dient. Entsprechend ist das erste Stellglied und/oder das zweite Stellglied unabhängig z.B. ein hydraulischer oder pneumatischer Stellzylinder, ein erster Spindelantrieb, Zahnstangenantrieb, Nockenantrieb, Kurvenscheiben- oder Exzenterantrieb, ein angetriebener Kniehebel, eine angetriebene Linearachse, ein Getriebeantrieb oder Zahnriemenantrieb. Das zweite Stellglied kann z.B. ein Spindelantrieb oder ein Keilantrieb mit zwei Keilen sein, von denen der eine gegen den anderen in einem Winkel zur Bewegungsrichtung des ersten Trägers, insbesondere senkrecht zum ersten Träger verschieblich ist.

Der erste Träger kann gegenüber einem Grundgestell entlang einer Führung verschieblich sein. Der zweite Träger kann ortsfest mit dem Grundgestell verbunden sein, mittels eines ersten Stellglieds, das zwischen Grundgestell und zweitem Träger angeordnet ist, geführt gegen den ersten Träger verschieblich sein, oder entsprechend des ersten Trägers mittels eines ersten Stellglieds, das ein zweites Stellglied trägt, gegen das Grundgestell verschieblich gegen den ersten Träger geführt sein.

Die Träger weisen jeweils eine Fixiereinrichtung zur Fixierung jeweils eines Abschnitts eines Materials auf, wobei vorzugsweise das Ende des Materials über einen Träger in Richtung auf den anderen Träger ragt. Zur Fixierung des Materials, das insbesondere streifenförmig und vorzugsweise flach ist, insbesondere ein Blechstreifen, weist jeder Träger eine ebene Fläche auf, gegen die das Material angeordnet wird. Diese ebene Fläche kann optional Teil der Fixiereinrichtung sein. Vorzugsweise weist die Fixiereinrichtung eine weitere, gegen die ebene Fläche eines Trägers bewegliche ebene Fläche auf, und bildet auf oder mit dem Träger zwei beabstandete und gegeneinander bewegliche ebene Flächen, zwischen denen Material, insbesondere ein Blechstreifen fixiert werden kann.

Bevorzugt weist jeder Träger einen Anschlag auf, der parallel zur Längsachse der Führung, entlang derer der erste Träger verschieblich ist, bis in einen spitzen Winkel gegen die Längsachse der Führung angeordnet ist und einen Oberflächenabschnitt des Trägers überragt, auf dem ein Material geordnet wird. Die Anschläge jedes Trägers sind vorzugsweise parallel oder in einem spitzen Winkel zueinander, z.B. 0° bis 45°, bevorzugt bis 30° oder bis 18°, weiter bevorzugt bis 15°, und die Stirnflächen sind, z.B. durch das Schneiden, in diesem Winkel zu ihrem Querschnitt angeordnet.

Die Anschläge sind in Bezug auf die Längsachse der Führung, entlang derer der erste Träger verschieblich ist, einander gegenüberliegend angeordnet, so dass die Materialien in Bezug auf ihre Längsachse an gegenüberliegenden Längskanten gegen die Anschläge anliegen. Bevorzugt sind die Anschläge in Bezug auf die Längsachse der Führung, entlang derer der erste Träger verschieblich ist, auf einer gemeinsamen Seite angeordnet, so dass die Materialien mit jeweils in Bezug auf ihre Längsachse derselben Längskante an den Anschlägen anliegen. Bevorzugt sind die Anschläge, insbesondere wenn sie bis in einen Winkel gegen die Längsachse der Führung angeordnet sind, entlang derer der erste Träger verschieblich ist, mit Versatz zueinander angeordnet. Ein solcher Versatz der Anschläge ist insbesondere so ausgebildet, dass die Stirnflächen der Materialenden nach dem Schneiden durch Bewegen der Träger passend gegeneinander angeordnet werden. So bewirkt der Versatz der Anschläge einen Ausgleich des Versatzes der Materialenden, der sich durch einen Abstand der Träger ergibt, wenn die Materialenden die Träger überragen. Der Versatz der Anschläge, der sich durch die Schnittbreite einer zum Schneiden verwendeten Schneideinrichtung, den Abstand der Anschläge zur Messerkante bzw. dem Maß, um das die geschnittenen Materialenden die Träger überragt und ggf dem Schnittwinkel ergibt, ist z.B. dann passend eingestellt, wenn die Schnittpunkte der durch die Anschläge verlaufenden Graden mit der jeweils benachbarten Kante der Schneideinrichtung auf einer Graden liegen, die parallel zur Bewegungsrichtung liegt, in der der erste Träger gegen den zweiten Träger verschieblich geführt ist. Bei Anordnung einer Schneideinrichtung, die zwei parallele Schnittkanten aufweist bzw. zwei parallele beabstandete Stirnflächen der Materialenden erzeugt, senkrecht zur Bewegungsrichtung des ersten Trägers ist der Versatz passend, wenn die Schnittpunkte der Graden, die durch die Anschläge verlaufen, auf einer senkrecht zur Schnittkante bzw. senkrecht zu den Stirnflächen liegenden Graden angeordnet sind.

Das erste Stellglied ist gemäß der Erfindung mit seinem Festende mit dem Grundgestell verbunden und mit seinem Losende mit dem ersten Träger, so dass der erste Träger mittels des ersten Stellglieds gegenüber dem Grundgestell beweglich ist. Der zweite Träger ist in Bewegungsrichtung des ersten Stellglieds angeordnet, z.B. an dem Grundgestell fixiert oder mittels eines Antriebs mit einem ersten oder mit einem ersten und einem zweiten Stellglied gegenüber dem Grundgestell beweglich.

In einer ersten Ausführungsform wirken das erste Stellglied und das zweite Stellglied gegeneinander, indem der Träger, dessen Antrieb von dem ersten und dem zweiten Stellglied gebildet ist, ein Schiebeelement aufweist oder mit einem Schiebeelement verbunden ist, das mit dem Losende des ersten Stellglieds und dem Losende des zweiten Stellglieds verbunden ist, insbesondere zwischen dem Losende des ersten Stellglieds und dem Losende des zweiten Stellglieds befestigt ist, während das Festende des ersten Stellglieds und das Festende des zweiten Stellglieds an dem gemeinsamen Grundgestell festgelegt sind. In dieser Ausführungsform bildet das zweite Stellglied eine Stoßfläche für das Schiebeelement, das die Bewegung des Schiebelements in Richtung auf den zweiten Träger begrenzt. Das zweite Stellglied weist zumindest zwei Teile auf, von denen das eine das mit dem Losende verbundene Losteil bildet und das andere das mit dem Festende verbundene Festteil, die ausschließlich durch Kraftschluss gegeneinander wirken. Durch Betätigen des ersten Stellglieds werden das Schiebeelement und der damit verbundene erste Träger verfahren. Die Betätigung des ersten Stellglieds bewirkt in einer Richtung eine Bewegung des Schiebeelements vom Festende des zweiten Stellglieds weg, z.B. in einen Betriebszustand, in dem die Träger voneinander entfernt sind, oder bei Betätigung in entgegengesetzter Richtung eine Bewegung des Schiebeelements in Richtung auf das Festende des zweiten Stellglieds, bis das Losteil des zweiten Stellglieds gegen das Festteil des zweiten Stellglieds anliegt, z.B. in einem Betriebszustand, in dem die Träger bis in einen vorbestimmten minimalen Abstand positioniert sind.

Ein Beispiel für ein zweites Stellglied, das zumindest zwei Teile, nämlich ein Losteil und ein Festteil aufweist, die bis zum Kraftschluss gegeneinander frei verschieblich sind, ist eine Keileinstellung mit zwei Keilen, von denen der eine mit dem Losende und der andere mit dem Festende verbunden ist, die relativ zueinander entlang der Keilflächen verschieblich sind. Ein weiteres Beispiel für ein zweites Stellglied, das zwei gegeneinander verschiebliche Teile aufweist, von denen das eine mit dem Losende unter das andere mit dem Festende verbunden ist, ist eine mit einer Stoßfläche zusammenwirkende Stellschraube, deren eines Ende gegen die Stoßfläche anliegt und deren anderes Ende in einem Gewinde geführt ist. In dieser Ausführungsform bildet die Stoßfläche das eine Teil und die in dem Gewinde geführte Stellschraube das andere Teil, die voneinander entfernbar sind, da die Stellschraube nicht mit der Stoßfläche in Eingriff steht. Ein Sensor ist mit dem Teil des zweiten Stellglieds verbunden, das gegenüber dem anderen Teil verschieblich ist, z.B. mit demjenigen der Keile, der gegenüber dem Grundgestell verschieblich ist bzw. mit der Stellschraube.

In der ersten Ausführungsform erlaubt die Ausbildung des zweiten Stellglieds in zwei voneinander entfernbare Teile, die in einer Wirkposition kraftschlüssig gegeneinander angeordnet sind, das Beabstanden des ersten Trägers vom zweiten Träger durch Betätigen des ersten Stellglieds, während das mit dem Festende des zweiten Stellglieds verbundene Festteil eine Stoßfläche bildet, der die Bewegung des ersten Trägers in Richtung auf den zweiten Träger begrenzt.

Insbesondere in der ersten Ausführungsform kann das zweite Stellglied in eine bestimmte Stellung voreingestellt sein, in der der Abstand zwischen Losende und Festende des zweiten Stellglieds festgelegt ist, da die Bewegung des ersten Trägers in Richtung auf den zweite Träger mittels des zweiten Stellglieds durch den Kraftschluss bzw. durch Kontaktieren seiner beiden Teile gegeneinander begrenzt ist.

In der ersten Ausführungsform des Verfahrens ist das Festende des zweiten Stellglieds mit dem Grundgestell verbunden, und das Losende des zweiten Stellglieds ist mit dem Losende des ersten Stellglieds verbunden, wobei vorzugsweise ein Schiebeelement, das mit dem ersten Träger verbunden ist, mit den beiden Losenden von erstem und zweitem Stellglied verbunden ist. Dabei weist das zweite Stellglied vorzugsweise zwei Teile auf, von denen eines mit dem Festende verbunden ist und das andere mit dem Losende, wobei beide Teile voneinander trennbar sind und durch Bewegen des ersten Trägers in Richtung auf das Festende des ersten Stellglieds voneinander getrennt werden, wobei vorzugsweise in dieser Stellung die über die Träger vorstehenden Materialenden geschnitten werden, und anschließend durch Betätigung des ersten Stellglieds das mit dem Losende des zweiten Stellglieds verbundene Teil des zweiten Stellglieds gegen sein mit dem Festende verbundenes Teil bewegt wird, bis erstes und zweites Teil aneinander anliegen, insbesondere reibschlüssig, wobei vorzugsweise in dieser Position die einander gegenüberliegenden Stirnfläche des ersten und zweiten Materialendes gegeneinander anliegen. Bevorzugt sind in dieser Position die Träger in einem vorbestimmten minimalen Abstand voneinander positioniert, in dem die Träger in Schweißstellung sind.

Der erste Träger und/oder das Schiebeelement ist generell mittels einer ersten Führungseinrichtung geführt, wobei bevorzugt der erste Träger und/oder das Schiebeelement starr mit der Führungseinrichtung verbunden ist.

Bevorzugt weist die Vorrichtung am Schiebelement zwei parallel zum Verbindungselement und/oder parallel zur Führung wirkende erste Stellglieder auf.

Bevorzugt ist das erste und/oder das zweite Stellglied durch eine Steuereinrichtung gesteuert und die Vorrichtung weist einen Sensor auf, der die Positionierung der Teile des zweiten Stellglieds misst, insbesondere die Positionierung des gegenüber dem Grundgestell beweglichen Teils des zweiten Stellglieds, oder der die Position des ersten Trägers relativ zum zweiten Träger misst. Die Steuereinrichtung ist dazu eingerichtet, das erste und/oder das zweite Stellglied in Abhängigkeit von dem Signal des Sensors zu steuern, das die Position des ersten Trägers relativ zum zweiten Träger angibt. Insbesondere ist die Steuereinrichtung eingerichtet, das erste und/oder das zweite Stellglied bis in eine vorbestimmte Position relativ zum zweiten Träger zu bewegen, z.B. bis in einen vorbestimmten Abstand des ersten Trägers vom zweiten Träger.

Weiter bevorzugt ist der Sensor ein Kraftsensor, der eingerichtet ist, die Kraft zwischen dem ersten Träger und dem zweiten Träger zu messen. In dieser Ausführungsform ist die Steuereinrichtung vorzugsweise eingerichtet, das erste und/oder zweite Stellglied in Abhängigkeit vom Signal des Kraftsensors zu steuern, bis der erste Träger bis zum Erreichen eines vorbestimmten Betrags für die Kraft, die zwischen dem ersten und dem zweiten Träger wirkt, gegen den zweiten Träger verfahren ist. Dabei kann die Vorrichtung eingerichtet sein, dass die auf den Trägern fixierten Materialenden über jeweils den Träger hinausstehen, an dem sie fixiert sind, und gegeneinander in einer gemeinsamen Ebene bewegt werden bis ihre Stirnseiten aneinander anstoßen, so dass ein Kraftsensor, der eingerichtet ist, die Kraft zwischen dem ersten und dem zweiten Träger zu messen, die als Maß für die zwischen den aneinander anstoßenden Stirnflächen der Materialenden wirkende Kraft bestimmt wird und z.B. zur Steuerung des ersten und/oder zweiten Stellglieds eingesetzt wird.

In der erfindungsgemäßen Ausführungsform kann die Stellung des zweiten Stellglieds des ersten Trägers, optional zusätzlich die Stellung des ersten Stellglieds und/oder des zweiten Stellglieds des zweiten Trägers, manuell festgelegt sein, insbesondere in einer Stellung, in der bei Anliegen der Teile des zweiten Stellglieds aneinander, z.B. bei Kraftschluss seiner beiden Teile, der erste Träger in einer Position ist, in der über die Träger ragende Materialenden nach Schneiden mittels der Schneideinrichtung in vorbestimmter Position und/oder mit vorbestimmter Kraft gegeneinander angeordnet sind.

In der erfindungsgemäßen Ausführungsform kann die Steuereinrichtung eingerichtet sein, das zweite Stellglied in eine Position zu steuern, in der bei Anliegen der Teile des zweiten Stellglieds, z.B. bei Kraftschluss seiner beiden Teile aneinander, der erste Träger in einer Position ist, in der über die Träger ragende Materialenden nach dem Schneiden mittels der Schneideinrichtung mit vorbestimmter Kraft gegeneinander angeordnet sind, wobei die Steuereinrichtung eingerichtet ist, den ersten Träger, optional zusätzlich den zweiten Träger zur Bewegung in eine voneinander beabstandete Position nur mittels Betätigung des jeweils ersten Stellglieds anzusteuern und nach Fixieren der Materialien an den Trägern und Schneiden der Materialenden den ersten Träger zur Bewegung in Richtung auf den zweiten Träger nur mittels Betätigung des jeweils ersten Stellglieds zu steuern.

Optional bevorzugt weist die Vorrichtung eine Schneideinrichtung auf, die eingerichtet ist, die am ersten und zweiten Träger fixierten Materialien, insbesondere Blechstreifen, deren Materialenden den Träger in Richtung auf den gegenüberliegenden Träger überragen, zu schneiden, insbesondere parallel zueinander zu schneiden. Die Schneideinrichtung kann einen Laser aufweisen, der auf den Bereich zwischen dem ersten und dem zweiten Träger gerichtet ist. Eine bevorzugte Schneideinrichtung weist ein Schneidelement auf, das angrenzend an ein Gegenmesser oder zwischen zwei Gegenmessern beweglich ist, insbesondere entlang eines Gegenmessers oder zwischen zwei Gegenmessern verfahrbar, insbesondere linear verfahrbar, oder verschwenkbar ist. Bevorzugt ist die Vorrichtung eingerichtet, die Träger in eine Schneidstellung zu positionieren, in der die Schneideinrichtung die Materialenden schneidet und in der z.B. die Schneideinrichtung zwischen den Trägern bewegbar ist. Zur Positionierung des ersten und/oder des zweiten Trägers in Schneidstellung kann die Vorrichtung eine Steuerungseinrichtung aufweisen, die eingerichtet ist, den ersten und/oder den zweiten Träger in eine vorbestimmte Schneidstellung zu positionieren und/oder die Vorrichtung kann jeweils eine Stoßfläche für den ersten und/oder den zweiten Träger aufweisen, bei dessen Kontakt der erste und/oder der zweite Träger in Schneidstellung positioniert sind.

Bevorzugt weist die Vorrichtung eine Schweißleiste auf, die nach Schneiden der Materialenden, bevorzugt vor oder nach Verschieben des ersten Trägers gegen den zweiten Träger, insbesondere bis in eine Position, in der die geschnittenen Materialenden gegeneinander stoßen, bis angrenzend an die Ebene positioniert wird, in der sich die Träger bzw. die auf den Trägern angeordneten Materialien erstrecken. Eine Schweißleiste hat z.B. zwei Auflageflächen, die parallel zur Ebene der Träger ausgerichtet sind und zwischen sich eine Nut begrenzen, die parallel zu den aneinanderstoßenden Materialenden angeordnet ist. Eine Schweißleiste unterstützt die Ausrichtung der Materialenden in einer gemeinsamen Ebene und dient bevorzugt während des Schweißens der Wärmeableitung angrenzend an die Stirnflächen der Materialenden. Durch die Nut der Schweißleiste kann von unten Schutzgas an die Materialenden herangeführt werden. Entsprechend weist die Vorrichtung optional eine Zuführeinrichtung für Schutzgas auf, die z.B. in der Nut der Schweißleiste mündet.

In Ausführungsformen mit Schweißleiste kann die Fixiereinrichtung des ersten und/oder des zweiten Trägers einen Fortsatz mit einer Fläche haben, die etwa parallel zu den Trägern und/oder parallel zu den Auflageflächen der Schweißleiste verläuft.

Weiter bevorzugt ist die Schweißleiste am Schneidelement angebracht, so dass die Schweißleiste nach dem Bewegen des Schneidelements zwischen den Trägern zum Schneiden der Materialenden durch Bewegen des Schneidelements positioniert werden kann, insbesondere angrenzend an die Materialenden positioniert wird. Optional ist in dieser Ausführungsform die Schweißleiste gegenüber der Schweißeinrichtung am Schneidelement angebracht, und weiter bevorzugt ist die Schweißleiste am Schneidelement gegenüber dessen Schneidkante angebracht und durch Bewegen des Schneidelements angrenzend an die Ebene positionierbar, in der sich die Träger erstrecken. Bevorzugt ist die Schneideinrichtung eingerichtet, zum Schneiden zwischen den Trägern, die in einer Schneidstellung beabstandet positioniert sind, bewegt zu werden, wobei nach dem Schneiden die Träger in ihre Schweißstellung bewegt werden und das Schneidelement bewegt wird, bis die Schweißleiste angrenzend an die Ebene positioniert ist, in der sich die Träger bzw. die auf den Trägern fixierten Materialenden erstrecken.

Besonders bevorzugt ist die Vorrichtung eingerichtet, den ersten und/oder den zweiten Träger nach dem Schneiden voneinander weiter zu beabstanden als sie in der Schneidposition beabstandet sind und anschließend die Schneideinrichtung zwischen den Trägern weg zu bewegen. Auf diese Weise wird, insbesondere wenn die Schneideinrichtung Messer aufweist, die nach dem Schneiden gegen die geschnittenen Stirnflächen der Materialenden anliegen, eine mechanische Belastung der geschnittenen Stirnflächen vermieden.

Die Fixiereinrichtung jedes Trägers weist vorzugsweise einen Klemmbalken auf, der eine zur ebenen Fläche des Trägers, auf der ein Material angeordnet wird, ebene Klemmfläche aufweist. Ein Klemmbalken kann gegen den Träger schwenkbar sein und/oder parallel gegen den Träger verschieblich geführt sein. Ein Klemmbalken, der gegen den Träger verschwenkbar angelenkt ist oder gegen den Träger verschieblich geführt ist, ist vorzugsweise an seinem ersten Ende schwenkbar am Träger angelenkt bzw. verschieblich gelagert am Träger. Der Klemmbalken kann an seinem ersten Ende einen ersten Klemmantrieb aufweisen, der den Klemmbalken vom Träger beabstandet bzw. für eine Klemmposition gegen den Träger belastet.

Der Klemmbalken ist bevorzugt an einem zweiten Ende, das zumindest um die Breite des Materials bzw. um die Breite der ebenen Fläche vom ersten Ende beabstandet ist, gegen den Träger verschieblich geführt. Z.B. kann der Klemmbalken an seinem zweiten Ende mit einem zweiten Klemmantrieb in Eingriff stehen oder mit diesem in einen lösbaren Eingriff treten oder mit diesem lösbar verrastbar sein, wobei der zweite Klemmantrieb eingerichtet ist, den Klemmbalken in eine Klemmposition gegen den Träger zu belasten. Bevorzugt ist der erste Klemmantrieb mittels einer ersten Stange mit dem ersten Ende des Klemmbalkens verbunden, wobei die erste Stange senkrecht zur ebenen Fläche des Trägers geführt ist, z.B. in einer senkrecht zur Ebene des Trägers angeordneten Bohrung. Der zweite Klemmantrieb ist vorzugsweise mittels einer zweiten Stange mit dem zweiten Ende des Klemmbalkens in Eingriff bringbar bzw. verrastbar, wobei die zweite Stange weiter bevorzugt in einer Bohrung des Trägers angeordnet ist, die parallel zu der Bohrung liegt, in der die erste Stange angeordnet ist.

Bevorzugt werden generell erstes und zweites Stellglied von einer Steuerungseinheit in Abhängigkeit von dem Signal eines Sensors gesteuert, bis erster und zweiter Träger mit vorbestimmter Kraft gegeneinander belastet sind, die zwischen den Stirnflächen der auf ihnen fixierten Materialenden wirkt, oder bis erster und zweiter Träger in eine vorbestimmte Position gegeneinander verfahren sind.

Bevorzugt weist die Vorrichtung eine Schweißeinrichtung auf, insbesondere eine Laserschweißeinrichtung oder ein MIG- oder ein MAG- oder ein WIG-Schweißgerät, und das Verfahren weist den Schritt des Verschweißens der gegeneinander stoßenden Stirnflächen der Materialenden auf, insbesondere mittels MIG- oder MAG- oder WIG- oder Laserschweißen.

### Genaue Beschreibung der Erfindung

Die Erfindung wird nun genauer an beispielhaften Ausführungsformen mit Bezug auf die Figuren beschrieben, die schematisch
- in Figur 1 eine Ausführungsform der Vorrichtung in einer ersten Position,
- in Figur 2 die Ausführungsform von Figur 1 in einer zweiten Position zeigen,
- in Figur 3 eine weitere Ausführungsform in einer ersten Position,
- in Figur 4 die Ausführungsform von Figur 3 in einer zweiten Position,
- in Figur 5 eine perspektivische Ansicht einer Ausführung in einer ersten Position und
- in Figur 6 eine perspektivische Ansicht einer Ausführung in einer zweiten Position,
- in Figuren 7 bis 14 den bevorzugten Ablauf des Verfahrens und
- in Figuren 15 bis 18 die bevorzugte Fixiereinrichtung beim Verfahren zeigen.

In den Figuren bezeichnen gleiche Bezugsziffern funktionsgleiche Elemente. Die Figuren zeigen generell Ausführungsformen, in denen erstes und zweites Stellglied mit jeweils gleichen Funktionselementen versehen sind und gegeneinander bzw. voneinander verschieblich sind.

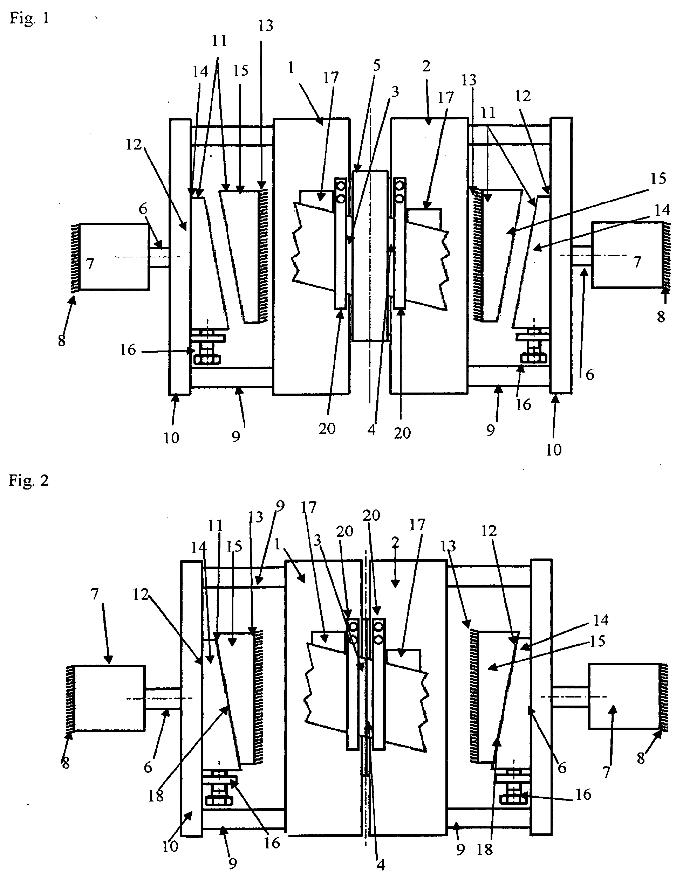

Figur 1 zeigt eine Aufsicht auf eine Vorrichtung gemäß der ersten Ausführungsform, bei der ein erster Träger 1 gegen einen zweiten Träger 2 verschieblich ist, und auf jedem Träger 1, 2 ein Material mittels einer Fixiereinrichtung 20 fixiert ist, deren Materialenden 3, 4 jeweils den Träger 1, 2 in Richtung auf den gegenüberliegenden Träger 2, 1 überragen. Das auf einem Träger 1, 2 angeordnete Material liegt mit einer Seitenkante gegen einen Anschlag 17. Eine Schneideinrichtung mit einem Schneidelement 5 kann zwischen den Trägern 1, 2 geführt werden, um die die Träger 1, 2 überragenden Materialien zu Materialenden 3, 4 zu schneiden, beispielsweise in parallele oder in einem spitzen Winkel von z.B. bis zu 15° oder 8° zum Querschnitt des Materials angeordnete Stirnflächen. Die Vorrichtung weist auf jedem Träger 1, 2 eine Fixiereinrichtung 20 auf, mittels derer die Materialien in einem Abstand zu ihren Stirnflächen 3, 4 auf den Trägern 1, 2 fixiert werden.

Figur 1 zeigt die Position, in der die Träger 1, 2 voneinander beabstandet sind. Der erste Träger 1 ist mit dem Losende 6 eines ersten Stellglieds 7 verbunden, dessen Festende 8 an einem Grundgestell festgelegt ist. Der erste Träger 1 ist an einem Verbindungselement 9 befestigt, das mittels einer Führungseinrichtung geführt ist, die vorzugsweise Führungsstangen oder Führungsschienen aufweist, die beispielsweise in Führungen geführt sind, die am Grundgestell befestigt sind. Der erste Träger 1 kann mittels eines Schiebeelements 10 mit dem Losende 6 des ersten Stellglieds 7 verbunden sein. Das zweite Stellglied 11 ist mit seinem Losende 12 mit dem ersten Träger 1 verbunden, insbesondere mittels des Schiebeelements 10. Das Festende 13 des zweiten Stellglieds 11 ist in dieser Ausführungsform mit dem Grundgestell verbunden und liegt dem Festende 8 des ersten Stellglieds 7 gegenüber, sodass das erste und zweite Stellglied 7, 11 gegeneinander wirken.

In der in Figur 1 gezeigten Position hat das erste Stellglied 7 den ersten Träger 1 in eine vom zweiten Träger 2 entfernte Position bewegt, sodass das zweite Stellglied 11 die Positionierung des ersten Trägers 1 nicht beeinflusst. Das zweite Stellglied 11 weist gemäß der bevorzugten Ausführungsform zwei voneinander trennbare Teile 14, 15 auf, die vorliegend voneinander beabstandet angeordnet sind, von denen ein Losteil 14 mit dem Losende 12 des zweiten Stellglieds 11 verbunden ist und von denen ein Festteil 15 mit dem Festende 13 des zweiten Stellglieds 11 verbunden ist. Vorzugsweise werden die Materialenden 3, 4 in dieser Position durch Schneiden in parallele Stirnflächen geformt.

Figur 2 zeigt die Position, in der durch Betätigung des ersten Stellglieds 7 der erste Träger 1 gegen den zweiten Träger 2 verschoben ist, sodass die Stirnflächen der Materialenden 3, 4 gegeneinander anliegen. Durch das Verschieben des ersten Trägers 1 ist auch das mit dem Losende 6 des ersten Stellglieds 7 verbundene Losteil 14 des zweiten Stellglieds 11 gegen sein Festteil 15 bewegt. In der hier gezeigten Position sind die beiden Teile 14, 15 des zweiten Stellglieds 11 aneinander angeordnet, sodass das zweite Stellglied 11 betätigt werden kann, um die Position des ersten Trägers 1 zu bewegen. Jedes Material bleibt durch die Fixiereinrichtung 20 auf einem Träger 1, 2 fixiert und liegt mit einer Seitenkante gegen einen Anschlag 17

In dieser Ausführungsform ist das zweite Stellglied 11 eine Keileinstellung, bei der das Losteil 14 ein Schiebekeil ist, der gegen die Keilfläche des mit dem Grundgestell verbundenen Festkeils, der das Festteil 15 bildet, beweglich ist. Zur Betätigung weist das Losteil 14 ein Antriebselement 16 auf, beispielsweise eine Stellschraube, mit der das Losteil 14 gegenüber dem Schiebeelement 10 beweglich ist, das z.B. die Verbindungselemente 9 mit dem ersten Stellglied 7 verbindet.

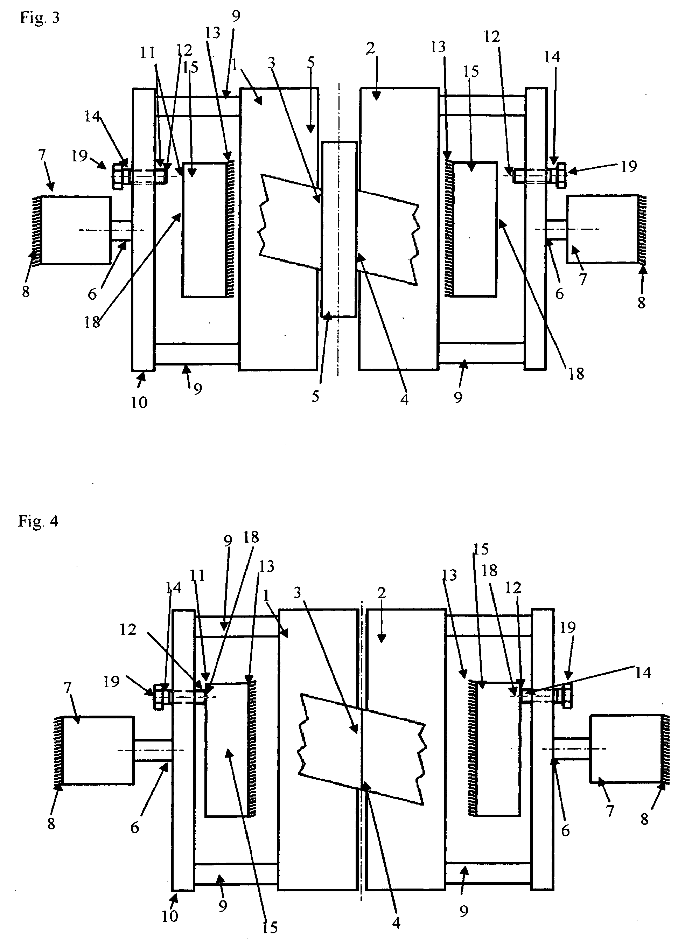

Figur 3 zeigt eine erste Ausführungsform, bei der das zweite Stellglied 11 von einer Stoßfläche 18 und einer Stellschraube 19 gebildet ist, von denen eines, vorliegend die Stoßfläche 18 als Festteil 15, mit dem Grundgestell verbunden ist, und das andere, vorliegend die Stellschraube 19, als Losteil 14 gegenüber dem ersten Stellglied 7 verschieblich gelagert ist, beispielsweise wie gezeigt mittels Gewindeeingriffs im Schiebeelement 10 geführt ist. Das Schiebeelement 10 verbindet das Losende 6 des ersten Stellglieds 7 mit dem ersten Träger 1. In der hier dargestellten Position, in der erster und zweiter Träger 1, 2 voneinander beabstandet sind, um insbesondere das Schneidelement 5 zwischen erstem und zweitem Träger 1, 2 durchzuführen, ist die das Losteil 14 bildende Stellschraube 19 des zweiten Stellglieds 11 von der Stoßfläche 18 entfernt, die das Festteil 15 des zweiten Stellglieds 11 bildet.

Bei Verfahren des ersten Trägers 1 gegen den zweiten Träger 2 wird das Losteil 14 in Form der Stellschraube 19 gegen das Festteil 15 in Form der Stoßfläche 18 bewegt Dieser Zustand ist in Figur 4 gezeigt und macht deutlich, dass erfindungsgemäß erstes und zweites Stellglied 7, 11 eine präzise Positionierung des ersten Trägers 1 gegen den zweiten Träger 2 erlauben, so dass auf den Trägern 1, 2 fixierte Materialenden 3, 4 mit ihren geschnittenen Stirnflächen gegeneinander anliegen.

In den in Figuren 2 und 4 gezeigten Positionen können die mit ihren Stirnflächen gegeneinander anliegende Materialenden 3, 4 miteinander verschweißt werden.

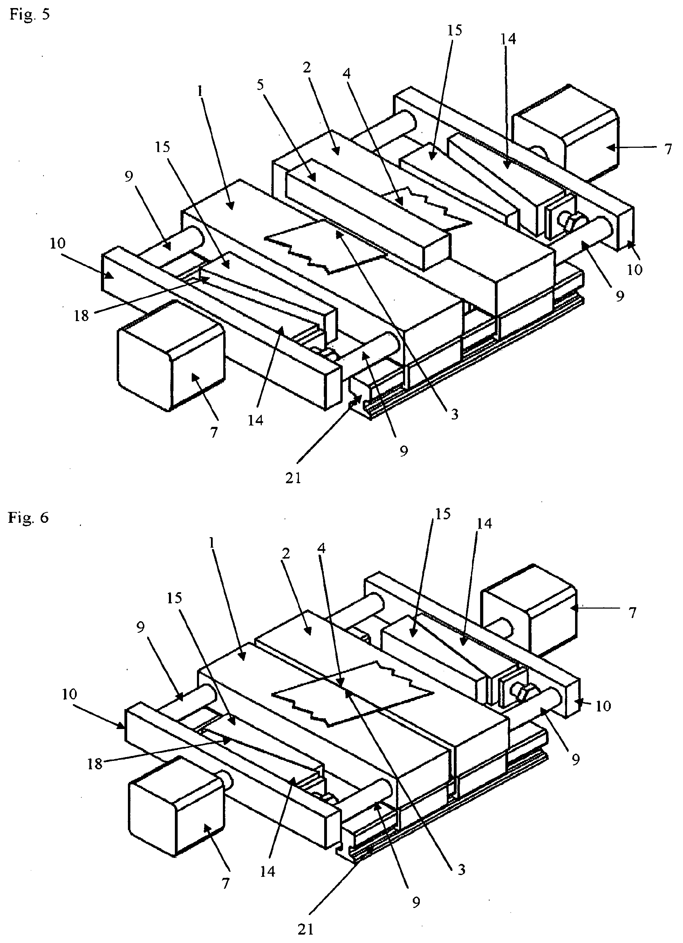

Figur 5 zeigt eine Schiene, an der der mit dem Verbindungselement 9 und dem Schiebeelement 10 starr befestigte erste Träger 1 geführt ist, als Beispiel für eine Führungseinrichtung 21. Bevorzugt weist die Vorrichtung zwei parallele Träger 1, 2 auf, die jeweils in einer Führungseinrichtung 21 geführt sind. In alternativen Ausführungsformen, in denen das erste Stellglied 7 einen verschieblichen Zylinder aufweist, der das Losende 6 des ersten Stellglieds 7 aufweist, kann der Zylinder das Verbindungselement 9 bilden und die Führungseinrichtung 21 kann durch die Bohrung gebildet sein, in der das Verbindungselement 9 im ersten Stellglied 7 geführt ist.

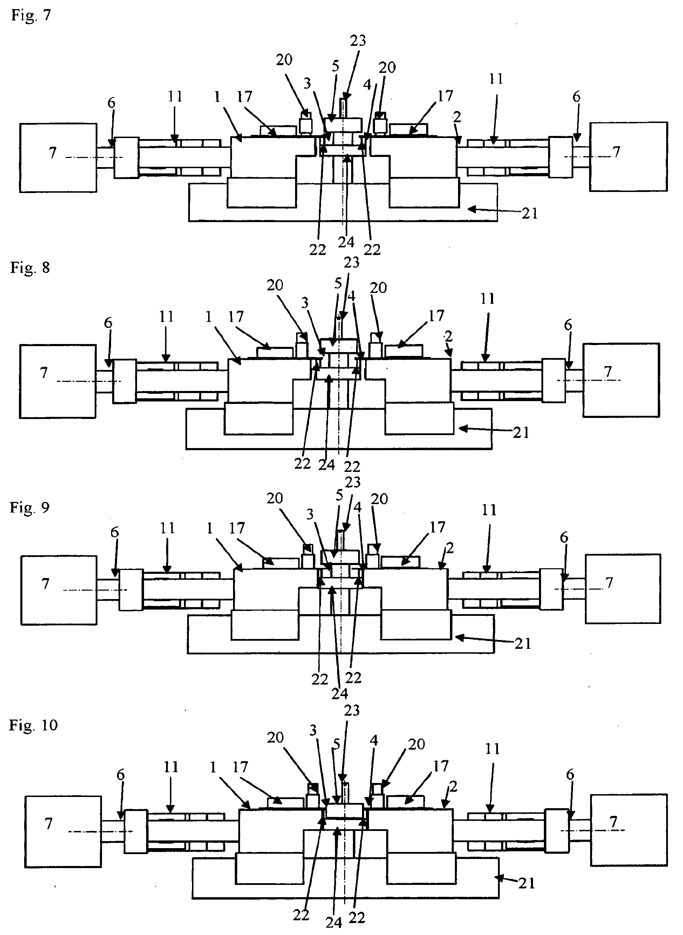

In Figuren 5 und 6 sind die Fixiereinrichtungen 20 und Anschläge 17, gegen die Material mit einer Seitenkante angeordnet wird, nicht dargestellt. In der perspektivischen Darstellung wird deutlich, dass die Führungseinrichtung 21 dazu beiträgt, die Träger 1, 2 präzise in eine vorbestimmte Position zueinander zu bringen, in der das Schneidelement 5 die Enden zu Stirnflächen schneidet, deren Ausrichtung zueinander durch das Schneidelement mitbestimmt wird. Die Führung des ersten Trägers 1 gegen den zweiten Träger 2, z.B. entlang der Führungseinrichtung 21, erlaubt die positionsgenaue Anordnung der Stirnflächen der Materialenden 3, 4 gegeneinander. Die Anordnung dieser Stirnflächen mit vorbestimmter Position gegeneinander wird durch die Bewegung des ersten Trägers 1 gegen den zweiten Träger 2 durch die Betätigung von erstem Stellglied 7 und zweitem Stellglied 11 erzeugt. Der bevorzugte Verfahrensablauf ist in Figuren 7 bis 14 schrittweise dargestellt. Die hier gezeigte erste Ausführungsform der Vorrichtung weist Schiebekeile als zweites Stellglied auf, von denen der mit dem Losende verbundene Keil senkrecht zur Bewegungsrichtung des ersten Stellglieds beweglich ist. An diesem verschieblichen Teil des zweiten Stellglieds ist ein Positionssensor angebracht, dessen Signal die Stellung des verschieblichen Teils dieses Stellglieds angibt und bevorzugt zur Steuerung eines Stellantriebs für dieses verschiebliche Teil eingesetzt wird.

In Figur 7 sind die Träger 1, 2 in der Schneidposition angeordnet, in der eine Schneideinrichtung, die als Schneidelement 5 mit zwei beabstandeten parallelen Gegenmessern 22 ausgebildet ist, zwischen den Trägern 1, 2 positioniert ist. Die Kanten der Materialien liegen gegen Anschläge 18, die die Träger 1, 2 überragen. Die Fixiereinrichtungen 20 sind noch nicht gegen die Träger 1, 2 angeordnet. Wie generell bevorzugt, liegen die Schneidkanten der Gegenmesser 22 in der Ebene der Träger 1, 2, so dass die Gegenmesser 22 gegen die Materialien stoßen, die über die Träger 1, 2 ragen.

Figur 8 zeigt, dass die Fixiereinrichtungen 20, vorliegend als Klemmbalken ausgeführt, die Materialien durch paralleles Verfahren gegen die Träger 1, 2 fixieren.

Figur 9 zeigt den optionalen Schritt, die Träger 1, 2 durch Bewegen gegeneinander in die Schneidstellung zu bringen.

Figur 10 zeigt das Schneiden der Materialenden 3, 4 in parallele Stirnflächen durch Bewegen des Schneidelements 5 zwischen die Gegenmesser 22. In dieser Position berühren die Stirnflächen der Materialenden 3, 4 das Schneidelement 5.

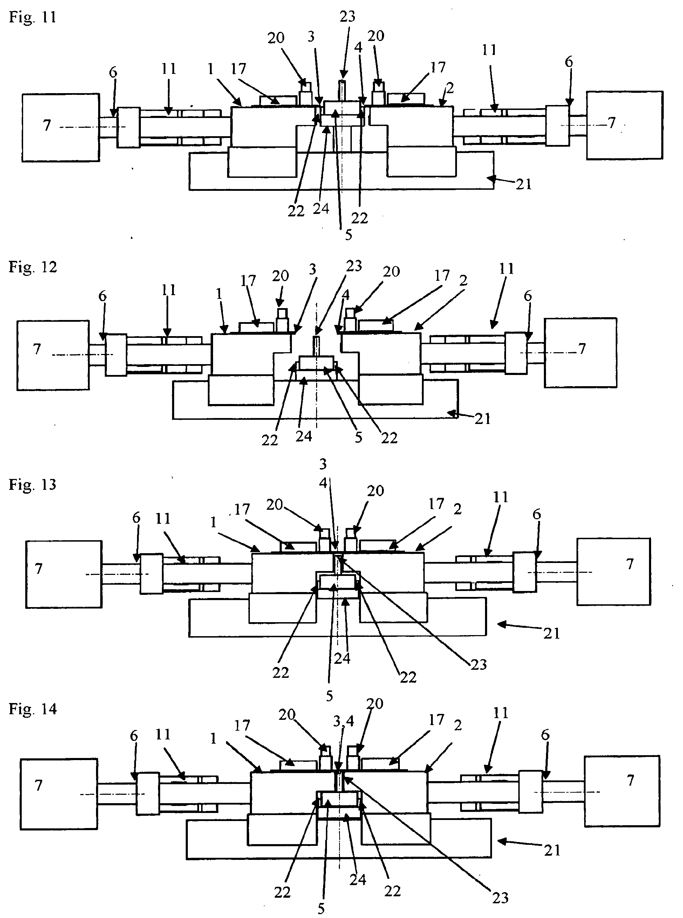

Wie Figur 11 zeigt, ist es zur Vermeidung einer mechanischen Belastung der Materialenden 3, 4 durch das Schneidelement 5 bevorzugt, die Träger 1, 2 voneinander weg zu bewegen, bis sie in einen größeren Abstand bewegt sind, als sie in der Schneidstellung einnehmen. Dies ist generell dann bevorzugt, wenn die Gegenmesser 22 auf ihrer Seite, die dem Schneidelement 5 gegenüberliegt, auf einem Messerträger 24 fixiert sind, dessen Seiten bei seiner Positionierung in Schneidstellung zwischen den Trägern 1, 2 Anschläge für die Träger 1, 2 bilden. In dieser Ausführungsform der Vorrichtung ist der Messerträger 24 in Schneidstellung kraftschlüssig zwischen den Trägern 1, 2 angeordnet, so dass die Träger 1, 2 in einen größeren Abstand beweglich sind, und mit dem Schneidelement 5 auch den Messerträger 24 mit den Gegenmessern 22 aus dem Bereich zwischen den Trägern 1, 2 beweglich sind.

Figur 12 zeigt das bevorzugte Absenken des Schneidelements 5 in eine Position unterhalb der Ebene der Träger 1,2.

In dieser Ausführungsform der Vorrichtung weist das Schneidelement 5 auf seiner der Schneidkante gegenüberliegenden Fläche eine Schweißleiste 23 auf.

Figur 13 zeigt das Bewegen der Träger 1, 2 gegeneinander bis in die Schweißstellung, in der die Materialenden 3, 4 im vorbestimmten Abstand gegeneinander positioniert sind.

Figur 14 zeigt, dass eine Schweißleiste 23 gegen die die Träger 1, 2 überragenden Materialenden 3, 4 angeordnet werden kann, vorliegend durch Bewegen des Schneidelements 5 bis die Auflageflächen der Schweißleiste 23 etwa in der Ebene der Träger 1, 2 angeordnet sind, so dass sie parallel zu den Materialenden 3,4 liegen und die zwischen den Auflageflächen angeordnete Nut der Schweißleiste parallel zu den Stirnflächen der Materialenden 3, 4 liegt.

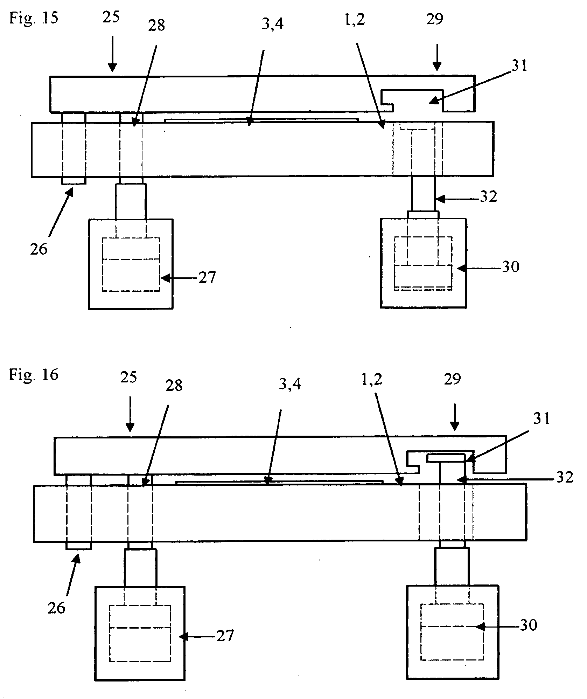

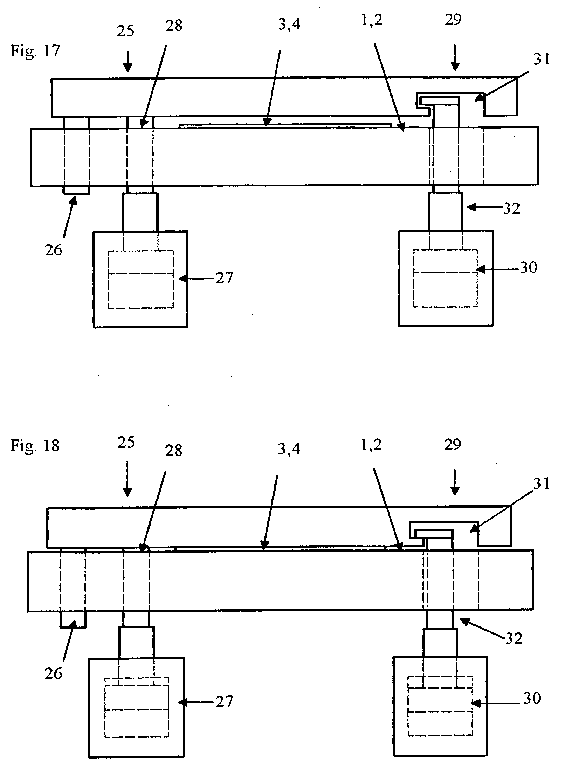

Die in Figuren 15 bis 18 gezeigte bevorzugte Ausführungsform der Fixiereinrichtung 20 ist eine Klemmleiste, die am ersten Ende 25 der Klemmleiste am Träger 1, 2 geführt ist, z.B. an einer Säule 26, wobei bevorzugt die Säule 26 senkrecht zum Träger 1, 2 angeordnet ist. Am ersten Ende 25 der Klemmleiste ist ein erster Klemmantrieb 27 angeordnet, der mit einer ersten Klemmstange 28 mit der Klemmleiste verbunden ist und durch den die Klemmleiste gegen den Träger 1, 2 belastbar ist. An ihrem dem ersten Ende 25 gegenüberliegenden zweiten Ende 29 ist die Klemmleiste mittels einer Rasteinrichtung 31, in die eine zweite Klemmstange 32 lösbar eingreift, mit dem zweiten Klemmantrieb 30 verbindbar. Die Verrastung der zweiten Klemmstange 32 mit der Klemmleiste in der Rasteinrichtung kann, wie in Figur 16 gezeigt, durch Anordnung der zweiten Klemmstange 32 in einer Ausnehmung der Klemmleiste erfolgen, z.B. wie in Figur 17 gezeigt, durch Verschieben der zweiten Klemmstange 32.

Die erste Klemmstange 28 und die zweite Klemmstange 32 sind in senkrecht zum Träger 1, 2 angeordneten Bohrungen und/oder im Hydraulik- oder Pneumatikzylinder angeordnet.
Figur 18 zeigt, dass bevorzugt der erste und der zweite Klemmantrieb 27, 30 mittels paralleler Klemmstange 28, 32 die Klemmleiste gegen den Träger 1, 2 belasten, um die Klemmleiste in paralleler Ausrichtung gegen den Träger 1, 2 zu belasten. Es hat sich gezeigt, dass auf diese Weise ein Materialende 3, 4 im Wesentlichen ohne Verformung auf dem Träger, mit ausreichend Klemmkraft über die gesamte Breite des Materials, fixiert werden kann.
Durch Absenken der zweiten Klemmstange 28 kann das Material nach dem Schweißen nach rechts entnommen werden.

**Bezugszeichenliste:**

| | | | |
|---|---|---|---|
| 1 | erster Träger | 17 | Anschlag |
| 2 | zweiter Träger | 18 | Stoßfläche |
| 3 | Materialende | 19 | Stellschraube |
| 4 | Materialende | 20 | Fixiereinrichtung |
| 5 | Schneidelement | 21 | Führungseinrichtung |
| 6 | Losende des ersten Stellglieds | 22 | Gegenmesser |
| 7 | erstes Stellglied | 23 | Schweißleiste |
| 8 | Festende des ersten Stellglieds | 24 | Messerträger |
| 9 | Verbindungselement | 25 | erstes Ende der Klemmleiste |
| 10 | Schiebeelement | 26 | Säule |
| 11 | zweites Stellglied | 27 | erster Klemmantrieb |
| 12 | Losende des zweiten Stellglieds | 28 | erste Klemmstange |
| 13 | Festende des zweiten Stellglieds | 29 | zweites Ende der Klemmleiste |
| 14 | Losteil des zweiten Stellglieds | 30 | zweiter Klemmantrieb |
| 15 | Festteil des zweiten Stellglieds | 31 | Rasteinrichtung |
| 16 | Antriebselement | 32 | zweite Klemmstange |

## Patentansprüche

1. Vorrichtung zum Halten und Verbinden zweier Materialenden (3, 4) mit einem Grundgestell, und mit einem ersten Träger (1) und einem zweiten Träger (2), die jeweils einen den Träger (1, 2) überragenden Anschlag und jeweils eine Fixiereinrichtung (20) für ein Materialende (3, 4) aufweisen, mit einer Schneideinrichtung zum Schneiden der Materialenden (3, 4) in Stirnflächen und mit einer Schweißeinrichtung, die eingerichtet ist, die zwei Materialenden (3, 4) in dem Bereich zwischen dem ersten Träger (1) und dem zweiten Träger (2) miteinander zu verschweißen, **dadurch gekennzeichnet, dass** zumindest der erste Träger (1) gegen den zweiten Träger (2) verschieblich geführt ist, wobei der erste Träger (1) mit einem ersten Stellglied (7) und einem damit verbundenen zweiten Stellglied (11) zur Positionierung verbunden ist, wobei das erste Stellglied (7) mit seinem Festende (8) an dem Grundgestell befestigt ist und mit seinem Losende (6) mit einem Schiebeelement (10) verbunden ist, das mit dem ersten Träger (1) verbunden ist und das zweite Stellglied (11) mit seinem Losende (12) mit dem Schiebeelement (10) verbunden ist und das Festende (13) des zweiten Stellglieds (11) mit dem Grundgestell verbunden ist.

2. Vorrichtung nach Anspruch 1, **dadurch gekennzeichnet, dass** der zweite Träger (2) gegen den ersten Träger (1) verschieblich geführt ist und mit einem ersten Stellglied (7) und einem damit verbundenen zweiten Stellglied (11) zur Positionierung verbunden ist.

3. Vorrichtung nach einem der voranstehenden Ansprüche, **dadurch gekennzeichnet, dass** das zweite Stellglied (11) zwischen dem Losende (6) des ersten Stellglieds (7) und dem ersten Träger (1) angeordnet ist.

4. Vorrichtung nach einem der voranstehenden Ansprüche, **dadurch gekennzeichnet, dass** das zweite Stellglied (11) an seinem Festende einen Festkeil (15) und an seinem Losende einen Loskeil (14) aufweist, von denen zumindest einer gegen den anderen verschieblich ist.

5. Vorrichtung nach einem der Ansprüche 1 bis 3, **dadurch kennzeichnet, dass** das zweite Stellglied eine Stoßfläche (18) und eine gegen die Stoßfläche (18) geführte Stellschraube (19) aufweist.

6. Vorrichtung nach einem der voranstehenden Ansprüche, **gekennzeichnet durch** einen Sensor, der zur Bestimmung der Positionierung der Teile des zweiten Stellglieds zueinander eingerichtet ist oder der zur Messung des Abstands zwischen dem ersten Träger (1) und dem zweiten Träger (2) eingerichtet ist und eine Steuereinrichtung, die eingerichtet ist, das zweite Stellglied (11) in Abhängigkeit von dem Signal des Sensors zu steuern.

7. Vorrichtung nach einem der voranstehenden Ansprüche, **gekennzeichnet durch** einen Kraftsensor, der zur Messung der Kraft zwischen dem ersten Träger (1) und dem zweiten Träger (2) eingerichtet ist und eine Steuereinrichtung, die das zweite Stellglied (11) in Abhängigkeit von dem Signal des Kraftsensors steuert.

8. Vorrichtung nach einem der voranstehenden Ansprüche, **dadurch gekennzeichnet, dass** zumindest der erste Träger (1) an einem Verbindungselement (9) befestigt ist und der erste Träger (1) durch eine Führungseinrichtung (21) linear beweglich am Grundgestell geführt ist.

9. Vorrichtung nach einem der voranstehenden Ansprüche, **dadurch gekennzeichnet, dass** die Fixiereinrichtung (20) ein Klemmbalken ist, der zumindest abschnittsweise eine zur Ebene des Trägers (1, 2) parallele Klemmfläche aufweist und der an seinem ersten Ende an einem Träger (1, 2) geführt und mittels eines ersten Klemmantriebs (27) gegen den Träger (1, 2) belastbar ist und der Klemmbalken an seinem vom ersten Ende (25) um zumindest die Klemmfläche beabstandeten zweiten Ende (29) mit einem zweiten Klemmantrieb (30) in Eingriff bringbar und gegen den Träger (1, 2) belastbar ist.

10. Vorrichtung nach einem der voranstehenden Ansprüche, **gekennzeichnet dadurch, dass** die Träger (1, 2) gesteuert in eine Schneidstellung positionierbar sind, dass ein Schneidelement (5) der Schneideinrichtung in Schneidstellung zwischen den Trägern (1, 2) beweglich ist, dass die Träger (1, 2) gesteuert in einen größeren Abstand beweglich sind, als sie in der Schneidstellung einnehmen, und dass das Schneidelement (5) aus dem Bereich zwischen den Trägern (1, 2) weg beweglich ist.

11. Vorrichtung nach einem der voranstehenden Ansprüche, **gekennzeichnet dadurch, dass** das Schneidelement (5) eine Schweißleiste mit zwei durch eine Nut beabstandete, parallel zur Ebene der Träger ausgerichtete Auflageflächen aufweist, die angrenzend an die Ebene positionierbar sind, in der sich die Träger (1, 2) erstrecken.

12. Verfahren zur Herstellung entlang ihrer einander gegenüberliegend angeordneten Stirnflächen verschweißter Materialenden (3, 4) mit den Schritten:
Fixieren eines ersten Materialendes (3) an einem ersten Träger (1) und Fixieren eines zweiten Materialendes (4) an einem zweiten Träger (2),
Schneiden der Materialenden (3, 4) in zueinander parallele und einander gegenüberliegende Stirnflächen,
Bewegen des an einem Verbindungselement (9) fixierten ersten Trägers (1) in Richtung auf den zweiten Träger (2) entlang einer Führungseinrichtung (21), bis die Stirnflächen der Materialenden (3, 4) in vorbestimmter Position aneinander anliegen durch Betätigen eines ersten Stellglieds (7) und Verschweißen der gegeneinander angeordneten Stirnflächen der Materialenden (3, 4), **dadurch gekennzeichnet, dass** das erste Stellglied (7) mit seinem Festende (8) an einem Grundgestell befestigt ist und dessen Losende (6) mit einem Schiebeelement (10) verbunden ist, das mit dem ersten Träger (1) verbunden ist und das zweite Stellglied (11) mit seinem Losende (12) mit dem Schiebeelement (10) verbunden ist und das Festende (13) des zweiten Stellglieds (11) mit dem Grundgestell verbunden ist.

13. Verfahren nach Anspruch 14, **dadurch gekennzeichnet, dass** der erste Träger (1) und der zweite Träger (2) vor dem Schneiden in eine Schneidstellung bewegt werden, dass die Materialenden (3, 4) mittels eines zwischen den Trägern (1,2) bewegten Schneidelements (5) geschnitten werden, dass die Träger (1, 2) nach dem Schneiden voneinander weg bewegt werden und das Schneidelement anschließend aus dem Raum zwischen den Trägern (1, 2) weg bewegt wird und die Träger (1, 2) in die Schweißstellung bewegt werden, in der die Materialenden (3, 4) mit vorbestimmtem Abstand gegeneinander positioniert sind und während des Verschweißens eine Schweißleiste angrenzend an die Materialenden (3, 4) angeordnet ist.

## Claims

1. Device for holding and connecting two material ends (3,4) comprising a base frame, a first carrier (1) as well as a second carrier (2) which respectively have a stop protruding beyond the respective carrier (1,2) and a fixing device (20) for the ends of the material (3,4), with a cutting device for cutting the ends of the material (3,4) in end faces, and with a welding device which is configured for welding together the two ends of the material (3,4) in the area between the first carrier (1) and the second carrier (2), **characterized in that** at least the first carrier (1) is slidably guided in the direction of the second carrier (2), wherein the first carrier (1) is connected to a first adjusting member (7) and to a second adjusting member (11) which is connected to the first adjusting member for positioning, wherein the first adjusting member (7) is fastened with its fixed end (8) to the base frame and is connected with its loose end (6) to a sliding element (10) which is connected to the first carrier (11) and the second adjusting member (11) is connected with its loose end (12) to the sliding element (10) and the fixed end (13) of the second adjusting member (11) is connected to the base frame.

2. Device according to claim 1, **characterized in that** the second carrier (2) is guided so as to be slidable relative to the first carrier (1) and is connected with a first adjusting member (7) and a second adjusting member (11) connected to the first adjusting member for positioning.

3. Device according to one of the preceding claims, **characterized in that** the second adjusting member (11) is positioned between the loose end (6) of the first adjusting member (7) and the first carrier (1).

4. Device according to one of the preceding claims, **characterized in that** the second adjusting member (11) has at its fixed end a fixed wedge (15) and at its loose end a loose wedge (14), of which at least one is slidable relative to the other.

5. Device according to one of the claims 1 to 3, **characterized in that** the second adjusting member has a stop surface (18) and an adjusting screw (19) guided relative to the stop surface (18).

6. Device according to one of the preceding claims, **characterized by** a sensor, which is configured for determining the positioning of the parts of the second adjusting member relative to each other or which is configured for measuring the distance between the first carrier (1) and the second carrier (2), and a control device which is configured for controlling the second adjusting member (11) in dependence on the signal of the sensor.

7. Device according to one of the preceding claims, **characterized by** a force sensor, which is configured for measuring the force between the first carrier (1) and the second carrier (2), and a control unit which controls the second adjusting member (11) in dependence on the signal of the force sensor.

8. Device according to one of the preceding claims, **characterized in that** at least the first carrier (1) is fastened to a connecting element (9) and the first carrier (1) is linearly movably guided on the base frame by a guiding device (21).

9. Device according to one of the preceding claims, **characterized in that** the fixing device (20) is a clamping beam which, at least partly, has a clamping surface parallel to the plane of the carrier (1,2) and which is guided at its first end on one carrier (1,2) and is capable of being biased against the carrier (1,2) by means of a first clamping drive (27), and the clamping beam can, at its second end spaced from the first end (25) by at least the clamping surface, be brought into engagement with a second clamping drive (30) and can be biased against the carrier (1,2).

10. Device according to one of the preceding claims, **characterized in that** the carriers (1,2) can be positioned in a controlled manner in a cutting position, that a cutting element (5) of the cutting device is movable into a cutting position between the carriers (1,2), that the carriers (1,2) are movable in a controlled manner within a greater distance than they assume in the cutting position, and that the cutting element (15) is movable out of the area between the carriers (1,2).

11. Device according to one of the preceding claims, **characterized in that** the cutting element (5) has a welding ledge with two placement surfaces aligned parallel to the plane of the carriers and spaced apart by a groove and aligned parallel to the plane of the carriers, wherein the placement surface can be positioned adjacent the plane in which the carriers (1,2) extend.

12. Method for manufacturing material ends (3,4) welded along their end faces arranged opposite to each other with the steps:
fixing of a first material end (3) to a first carrier (1) and fixing of a second material end (4) to a second carrier (2),
cutting the material ends (3,4) with end faces extending parallel and opposite each to other,
moving the first carrier (1), which is fixed to a connecting element (9), in the direction toward the second carrier (2) along a guiding device (21), until the end faces of the material ends (3,4) abut to each other in a predetermined position by actuating a first adjusting member (7) and welding the abutting material ends (3,4), **characterized in that** the first adjusting member (7) is fastened with its fixed end (8) to a base frame and the loose end (6) is connected to a sliding element (10) which is connected to the first carrier (1), and the second adjusting member (11) is connected with its loose end (12) to the sliding element (10) and the fixed end (13) of the second adjusting member (11) is fastened to the base frame.

13. Method according to claim 12, **characterized in that** the firsts carrier (1) and the second carrier (2) are moved prior to cutting into a cutting position, that the material ends (3,4) are cut by means of a cutting element (5) which is moved between the carriers (1,2), that the carriers (1,2) are, after cutting, moved apart from each other, and the cutting element is subsequently moved out of the space between the carriers (1,2), and the carriers (1,2) are moved into the welding position, in which the material ends (3,4) are positioned with a predetermined spacing relative to each other, and during welding a welding ledge is arranged adjacent the material ends (3,4).

## Revendications

1. Ensemble pour maintenir et relier deux extrémités (3, 4) d'un matériau, l'ensemble présentant un bâti de base ainsi qu'un premier support (1) et qu'un deuxième support (2) qui présentent tous deux une butée qui déborde d'un support (1, 2) respectif et un dispositif (20) de fixation d'une extrémité (3, 4) du matériau, un dispositif de coupe qui coupe les extrémités (3, 4) du matériau dans leur surface frontale et un dispositif de soudage conçu pour souder l'une à l'autre les deux extrémités (3, 4) du matériau entre le premier support (1) et le deuxième support (2),
**caractérisé en ce**
**que** au moins le premier support (1) est guidé à coulissement par rapport au deuxième support (2),
**que** pour son positionnement, le premier support (1) est relié à un premier organe de réglage (7) et à une deuxième organe de réglage (11) relié au premier,
**que** le premier organe de réglage (7) est fixé sur le bâti de base par son extrémité fixe (8) et est relié par son extrémité libre (6) à un élément coulissant (10) qui est relié au premier support (1) et
**que** le deuxième organe de réglage (11) est relié par son extrémité libre (12) à l'élément coulissant (10) et l'extrémité fixe (13) du deuxième organe de réglage (11) est reliée au bâti de base.

2. Ensemble selon la revendication 1, **caractérisé en ce que** le deuxième support (2) est guidé à coulissement par rapport au premier support (1) **en ce que** pour son positionnement, il est relié à un premier organe de réglage (7) et à un deuxième organe de réglage (11) relié au premier.

3. Ensemble selon l'une des revendications précédentes, **caractérisé en ce que** le deuxième organe de réglage (11) est disposé entre l'extrémité libre (6) du premier organe de réglage (7) et le premier support (1).

4. Ensemble selon l'une des revendications précédentes, **caractérisé en ce que** le deuxième organe de réglage (11) présente à son extrémité fixe un biseau fixe (15) et à son extrémité libre un biseau libre (14), au l'un de ces biseaux pouvant coulisser par rapport à l'autre.

5. Ensemble selon l'une des revendications 1 à 3, **caractérisé en ce que** le deuxième organe de réglage présente une surface de butée (18) et une vis de réglage (19) guidée en direction de la de butée (18).

6. Ensemble selon l'une des revendications précédentes, **caractérisé par** un capteur conçu pour déterminer le positionnement mutuel des parties du deuxième organe de réglage ou pour mesurer la distance entre le premier support (1) et le deuxième support (2), et un dispositif de commande conçu pour commander le deuxième organe de réglage (11) en fonction du signal du capteur.

7. Ensemble selon l'une des revendications précédentes, **caractérisé par** un capteur de force conçu pour mesurer la force qui agit entre le premier support (1) et le deuxième support (2), et un dispositif de commande conçu pour commander le deuxième organe de réglage (11) en fonction du signal du capteur de force.

8. Ensemble selon l'une des revendications précédentes, **caractérisé en ce qu'**au moins le premier support (1) est fixé sur un élément de liaison (9) et **en ce que** le premier support (1) est guidé à déplacement linéaire sur le bâti de base par un dispositif de guidage (21).

9. Ensemble selon l'une des revendications précédentes, **caractérisé en ce que** le dispositif de fixation (20) est une barre de serrage dont au moins certaines parties présentent une surface de serrage parallèle au plan des supports (1, 2), qui est guidée par sa première extrémité sur un support (1, 2) et qui peut être sollicitée en direction du support (1, 2) au moyen d'un premier entraînement de serrage (27), tandis qu'à sa deuxième extrémité (29) séparée de la première extrémité (25) par la surface de serrage, la barre de serrage peut être engagée et sollicitée en direction du support (1, 2) par un deuxième entraînement de serrage (30).

10. Ensemble selon l'une des revendications précédentes, **caractérisé en ce que** les supports (1, 2) peuvent être positionnés de manière contrôlée dans une position de coupe, **en ce qu'**un élément de coupe (5) du dispositif de coupe peut être déplacé entre les supports (1, 2) pour être amené en position de coupe, **en ce que** les supports (1, 2) peuvent être écartées d'une distance plus grande que celle qu'ils prennent en position de coupe et **en ce que** l'élément de coupe (5) peut être sorti de la zone située entre les supports (1, 2).

11. Ensemble selon l'une des revendications précédentes, **caractérisé en ce que** l'élément de coupe (5) présente une latte de coupe qui présente deux surfaces de pose séparées par une rainure, orientées parallèlement au plan des supports et aptes à être placées en position adjacente au plan dans lequel les supports (1, 2) s'étendent.

12. Procédé de préparation d'extrémités (3, 4) de matériau soudées par leurs surfaces frontales placées bout-à-bout, le procédé présentant les étapes qui consistent à :
fixer une première extrémité (3) du matériau sur un premier support (1) et fixer une deuxième extrémité (4) du matériau sur un deuxième support (2),
découper les extrémités (3, 4) du matériau sur des surfaces frontales mutuellement parallèles et situées l'une en face de l'autre,
déplacer le premier support (1) fixé sur un élément de liaison (9), en direction du deuxième support (2) et le long d'un dispositif de guidage (21) jusqu'à ce que les surfaces frontales des extrémités (3, 4) du matériau reposent l'une contre l'autre dans une position prédéfinie, par actionnement d'un premier organe de réglage (7), et souder des surfaces frontales des extrémités (3, 4) du matériau disposées l'une contre l'autre,
**caractérisé en ce**
**que** en ce que le premier organe de réglage (7) est fixé sur le bâti de base par son extrémité fixe (8) et est relié par son extrémité libre (6) à un élément coulissant (10) qui est relié au premier support (1) et
en ce que le deuxième organe de réglage (11) est relié par son extrémité libre (12) à l'élément coulissant (10) et l'extrémité fixe (13) du deuxième organe de réglage (11) est reliée au bâti de base.

13. Procédé selon la revendication 14, **caractérisé en ce qu'**avant la découpe, le premier support (1) et le deuxième support (2) sont déplacés dans une position de coupe, **en ce que** les extrémités (3, 4) du matériau sont découpées au moyen d'un élément de coupe (5) déplacé entre les supports (1, 2), **en ce qu'**après la découpe, les supports (1, 2) sont écartés l'un de l'autre et l'élément de coupe est subséquemment déplacé hors de la chambre entre les supports (1, 2) et les supports (1, 2) sont déplacés dans la position de soudage dans laquelle les extrémités (3, 4) du matériau sont positionnées à une distance mutuelle prédéterminée, une latte de soudage étant disposée en position adjacente aux extrémités (3, 4) du matériau pendant le soudage.
